# EUROPÄISCHE PATENTSCHRIFT

(11) **EP 2 671 730 B1**
(45) Veröffentlichungstag und Bekanntmachung des Hinweises auf die Patenterteilung: **29.03.2017**
(21) Anmeldenummer: 13168472.2
(22) Anmeldetag: 21.05.2013
(51) Int. Cl.: B60C 9/20, B60C 9/00

(54) **Fahrzeugluftreifen**
Pneumatic tyre for a vehicle
Pneu de véhicule

(30) Priorität: 04.06.2012 DE 102012104819
(43) Veröffentlichungstag der Anmeldung: 11.12.2013
(73) Patentinhaber: Continental Reifen Deutschland GmbH, 30165 Hannover (DE)
(72) Erfinder: Blümel, Viktor, 30459 Hannover (DE)
(74) Vertreter: Preusser, Andrea

(56) Entgegenhaltungen:
- EP-A2- 0 738 615
- EP-A2- 1 905 616
- DE-A1-102010 060 257

## Beschreibung

Die Erfindung betrifft einen Fahrzeugluftreifen mit einem Gürtelpaket, welches wenigstens eine erste Arbeitslage und eine zweite Arbeitslage aufweist, wobei die erste und die zweite Arbeitslage aus in Kautschukmaterial eingebetteten, im Wesentlichen parallel und beabstandet zueinander angeordneten Festigkeitsträgern aus Stahl bestehen, wobei die Festigkeitsträger der ersten Arbeitslage kreuzend zu den Festigkeitsträgern der zweiten Arbeitslage angeordnet sind und wobei die erste Arbeitslage radial innen in Bezug auf die zweite Arbeitslage angeordnet ist, wobei die Festigkeitsträger der zweiten Arbeitslage eine höhere Bruchfestigkeit und/oder höhere Bruchenergie als die Festigkeitsträger der ersten Arbeitslage aufweisen.

Derartige Fahrzeugluftreifen sind aus der EP 0 738 615 A2, aus der EP 1 905 616 A2 sowie aus der DE 10 2010 060257 A1 bekannt.

Ein anderer Fahrzeugluftreifen ist aus der US 2009/0218025 A1 bekannt geworden. Die zwei sich in einem Winkel kreuzenden Arbeitslagen bestehen aus dem gleichen Material. Zur Verbesserung der Abriebs- und Traktionseigenschaft des Reifens, insbesondere von Motorradreifen, weisen die beiden Arbeitslagen unterschiedliche Eigenschaften in Bezug auf die Dehnungssteifheit auf. In einer gegebenen Umfangsebene ist die Dehnungssteifheit pro Breiteneinheit der ersten, radial inneren Arbeitslage gemessen in der Hauptrichtung der Festigkeitsträger der ersten Arbeitslage strikt größer als die Dehnungssteifheit pro Breiteneinheit der zweiten Arbeitslage, gemessen in der Hauptrichtung der Festigkeitsträger der zweiten Arbeitslage. Vereinfacht ausgedrückt bedeutet dieses üblicherweise, dass die erste, radial innere Arbeitslage "fester" als die zweite, radial äußere Arbeitslage ist.

Problematisch kann bei einer vorgenannten Gürtelkonstruktion jedoch die Beschädigungs- bzw. Durchstichresistenz gegenüber äußeren Einflüssen im Bereich des Laufstreifens sein. Da die radial innere Arbeitslage die "festere" Arbeitslage ist, kann es vorkommen, dass die "schwächere" radial äußere Arbeitslage Beschädigungen nur unzureichend widersteht. Dies ist im Besonderen relevant bei anderen Fahrzeugreifen als Motorradreifen, z.B. bei Pkw-, Van- und LT-Reifen. Hier zeigen sich die Vorteile der oben beschriebenen Anordnung verschieden "fester" Gürtellagen auf Abrieb- und Traktionseigenschaften i.A. nicht, da es hier im Fahrbetrieb zu einem Gleichgewicht zwischen den Kräften kommt, die von den einzelnen Gürtellagen aufgenommen werden, und daher fahrdynamisch die "festere" Arbeitslage auch nur so viel Kräfte aufnehmen kann wie die "schwächere" Arbeitslage.

Es ist daher die Aufgabe der Erfindung, einen Fahrzeugluftreifen bereitzustellen, der eine Gürtelkonstruktion aufweist, durch die die Beschädigungs- und Durchstichresistenz im Bereich des Laufstreifens verbessert ist, jedoch die Gürtelkonstruktion für die Hauptaufgaben des Reifens - Übertragung von Kräften auf die Straße (Traktion, Fahrstabilität), Abriebwiderstand - ausreichend erfüllt.

Die Aufgabe wird gelöst, indem die Festigkeitsträger der ersten Arbeitslage Monofilamente der Konstruktion 1x0,30 HT bei 110 epdm sind und dass die Festigkeitsträger der zweiten Arbeitslage Korde der Konstruktion 2x0,30 HT bei 80 epdm sind.

In einer gegebenen Umfangsebene ist die Bruchfestigkeit und/oder Bruchenergie pro Breiteneinheit der zweiten, radial äußeren Arbeitslage gemessen in der Hauptrichtung der Festigkeitsträger der zweiten Arbeitslage strikt größer als die Bruchfestigkeit und/oder Bruchenergie pro Breiteneinheit der ersten Arbeitslage, gemessen in der Hauptrichtung der Festigkeitsträger der ersten Arbeitslage.

"Bruchfestigkeit" meint die maximale Kraft die gemessen wird wenn der Festigkeitsträger bis zum Bruch gedehnt wird.
"Bruchenergie" meint das Integral über die Kraft die gemessen wird wenn der Festigkeitsträger bis zum Bruch gedehnt wird.

Innerhalb einer Materialklasse korrelieren die Größen "Dehnungssteifigkeit", "Bruchfestigkeit" und "Bruchenergie" i.A. miteinander.

Dadurch, dass die zweite Arbeitslage, welche radial außen in Bezug auf die erste Arbeitslage angeordnet ist, eine höhere Bruchfestigkeit und/oder Bruchenergie aufweist, wirkt diese quasi als Schutzschild vor Beschädigungen. Der Fahrzeugluftreifen ist hinsichtlich seiner Beschädigungs- und Durchstichresistenz verbessert. Die "schwächere" Gürtellage ist jedoch so ausgelegt, dass die Hauptaufgaben des Reifens - Übertragung von Kräften auf die Straße, Abriebwiderstand - ausreichend erfüllt werden.

"Monofilament" meint einen Festigkeitsträger, der aus einem einzigen Filament (linienförmiges Element beliebiger Länge) besteht.
"Kord" meint einen Festigkeitsträger, der aus wenigstens 2 linienförmigen Elementen besteht, welche miteinander verseilt sind.
"PKW-Fahrzeugluftreifen" meint PKW-, Van und LT-Fahrzeugluftreifen.
"Radial" meint eine Richtungsangabe, die senkrecht zur Drehachse des Fahrzeugluftreifens verläuft.
"epdm" meint "Enden per dm" und gibt die Anzahl der Festigkeitsträger pro Dezimeter an.

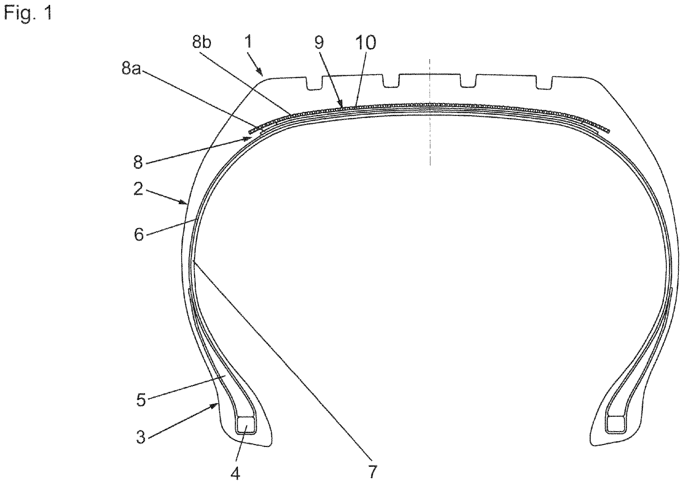

Die Erfindung wird nun anhand einer einzigen Figur, der Fig. 1, die ein schematisches Ausführungsbeispiel darstellt, näher erläutert.

Die Fig.1 zeigt einen Querschnitt durch einen Fahrzeugluftreifen radialer Bauart für Personenkraftwagen.

Der in Fig.1 gezeigte Fahrzeugluftreifen weist einen Laufstreifen 1, Seitenwände 2, Wulstbereiche 3 mit Wulstkernen 4 und Wulstprofilen 5, ferner eine Karkasslage 6, welche die beiden Wulstkerne 4 umläuft, eine Innenschicht 7 sowie eine zwischen der Karkasslage 6 und dem Laufstreifen 1 angeordneten Gürtelpaket 8 auf. Der Gürtelverband 8 weist bei der gezeigten Ausführungsform zwei Gürtellagen 8a und 8b, sogenannte "Arbeitslagen" auf, welche in bekannter Weise aus in eine Gummimischung eingebetteten, parallel zueinander verlaufenden Festigkeitsträgern aus Stahl bestehen können. Die Festigkeitsträger in der ersten, radial innen angeordneten Arbeitslage 8a verlaufen dabei gekreuzt zu den Festigkeitsträgern in der zweiten, radial äußeren Arbeitslage 8b und schließen mit der Reifenumfangsrichtung üblicherweise einen Winkel in der Größenordnung von 20° bis 35° ein. Radial außerhalb der beiden Arbeitslagen 8a, 8b befindet sich optional eine Bandagenlage 9 - eine cap-ply Lage - welche durch kontinuierliches und spiralförmiges Wickeln von gummierten Korden 10 aus Polyamid in Umfangsrichtung des Reifens gebildet wird und die seitlichen Randkanten des Gürtelverbandes 8 überdeckt.

Die Festigkeitsträger der zweiten Arbeitslage weisen erfindungsgemäß eine höhere Bruchfestigkeit und/oder Bruchenergie als die Festigkeitsträger der ersten Arbeitslage auf. Dieses wird in der speziellen Ausführung der Fig. 1 dadurch erreicht, dass die Festigkeitsträger der ersten Arbeitslage Stahl-Monofilamente der Konstruktion 1x0,30 HT bei 110 epdm sind und dass die Festigkeitsträger der zweiten Arbeitslage Stahl-Korde der Konstruktion 2x0,30 HT bei 80 epdm sind.

### Liste der Bezugszeichen

- 1: Laufstreifen
- 2: Seitenwand
- 3: Wulstbereich
- 4: Wulstkern
- 5: Wulstprofil
- 6: Karkasslage
- 7: Innenschicht
- 8: Gürtelpaket
- 8a: Gürtellage
- 8b: Gürtellage
- 9: Bandagenlage
- 10: Polyamid-Korde

## Patentansprüche

1. Fahrzeugluftreifen mit einem Gürtelpaket (8), welches wenigstens eine erste und eine zweite Arbeitslage (8a, 8b) aufweist, wobei die erste und die zweite Arbeitslage (8a, 8b) aus in Kautschukmaterial eingebetteten, im Wesentlichen parallel und beabstandet zueinander angeordneten Festigkeitsträgern aus Stahl bestehen, wobei die Festigkeitsträger der ersten Arbeitslage (8a) kreuzend zu den Festigkeitsträgern der zweiten Arbeitslage (8b) angeordnet sind und wobei die erste Arbeitslage (8a) radial innen in Bezug auf die zweite Arbeitslage (8b) angeordnet ist, wobei die Festigkeitsträger der zweiten Arbeitslage (8b) eine höhere Bruchfestigkeit und/oder höhere Bruchenergie als die Festigkeitsträger der ersten Arbeitslage (8a) aufweisen, **dadurch gekennzeichnet, dass** die Festigkeitsträger der ersten Arbeitslage (8a) Monofilamente der Konstruktion 1x0,30 HT bei 110 epdm sind und dass die Festigkeitsträger der zweiten Arbeitslage (8b) Korde der Konstruktion 2x0,30 HT bei 80 epdm sind.

## Claims

1. Pneumatic vehicle tyre having a belt pack (8) which has at least one first and one second working ply (8a, 8b), wherein the first and the second working ply (8a, 8b) are composed of strengthening members composed of steel which are embedded in rubber material and which are arranged substantially parallel to and spaced apart from one another, wherein the strengthening members of the first working ply (8a) are arranged so as to criss-cross the strengthening members of the second working ply (8b), and wherein the first working ply (8a) is arranged radially at the inside in relation to the second working ply (8b), wherein the strengthening members of the second working ply (8b) have a greater breaking strength and/or greater breaking energy than the strengthening members of the first working ply (8a), **characterized in that** the strengthening members of the first working ply (8a) are monofilaments of the construction 1x0.30 HT at 110 epdm, and **in that** the strengthening members of the second working ply (8b) are cords of the construction 2x0.30 HT at 80 epdm.

## Revendications

1. Pneu de véhicule comprenant un ensemble de ceinture (8) qui présente au moins une première et une deuxième couche de travail (8a, 8b), la première et la deuxième couche de travail (8a, 8b) se composant de renforts en acier noyés dans un matériau en caoutchouc, disposés essentiellement parallèlement et à distance les uns des autres, les renforts de la première couche de travail (8a) étant disposés de manière à croiser les renforts de la deuxième couche de travail (8b) et la première couche de travail (8a) étant disposée radialement à l'intérieur par rapport à la deuxième couche de travail (8b), les renforts de la deuxième couche de travail (8b) présentant une plus grande résistance à la rupture et/ou une plus grande énergie de rupture que les renforts de la première couche de travail (8a), **caractérisé en ce que** les renforts de la première couche de travail (8a) sont des monofilaments de construction 1x0,30 HT pour du epdm 110 et **en ce que** les renforts de la deuxième couche de travail (8b) sont des câbles de construction 2x0,30 HT pour du epdm 80.
